# EUROPEAN PATENT SPECIFICATION

(11) **EP 2 676 868 B1**
(45) Date of publication and mention of the grant of the patent: **16.11.2016**
(21) Application number: 13172246.4
(22) Date of filing: 17.06.2013
(51) Int. Cl.: B62D 7/14

(54) **Neutral Position Locking Apparatus and Rear Wheel Steering System including the same**
Neutralpositionsverriegelungsvorrichtung und Hinterradlenksystem damit
Appareil de verrouillage de la position neutre du braquage de roue arrière et système le comprenant

(30) Priority: 20.06.2012 JP 2012138644; 26.02.2013 JP 2013036114
(43) Date of publication of application: 25.12.2013
(73) Proprietor: JTEKT Corporation, Osaka-shi Osaka 542-8502 (JP)
(72) Inventor: Yamanaka, Kosuke, Osaka-shi, Osaka 542-8502 (JP); Furuyoshi, Masakazu, Osaka-shi, Osaka 542-8502 (JP); Oya, Toshiaki, Osaka-shi, Osaka 542-8502 (JP)
(74) Representative: Winter, Brandl, Fürniss, Hübner, Röss, Kaiser, Polte - Partnerschaft mbB

(56) References cited:
- EP-A1- 2 537 733
- DE-A1- 4 111 799
- JP-A- H0 357 775
- JP-A- H0 357 777
- JP-A- H03 114 976
- JP-A- H04 183 680
- US-A1- 2003 150 667

## Description

The invention relates to a neutral position locking apparatus that restricts the movement of a rack shaft in the rack axis direction, and to a rear wheel steering system including the neutral position locking apparatus.

In a neutral position locking apparatus of a conventional rear wheel steering system, a restriction pin is fitted in a pin-receiving portion formed in a rack shaft. When the restriction pin is fitted in the pin-receiving portion, the movement of the rack shaft in the rack axis direction is restricted. The distal end portion of the restriction pin has such a tapered shape that the diameter of the distal end portion decreases in a direction toward its distal end. The pin-receiving portion has such a tapered shape that the diameter of the pin-receiving portion decreases in a direction from the opening of the pin-receiving portion toward the bottom thereof. The tapered pin-receiving portion guides the restriction pin to a neutral position. When the distal end portion of the restriction pin is protruded from the pin-receiving portion to the maximum extent, the position of the rack shaft in the rack axis direction is locked (fixed) at the neutral position (see, for example, Japanese Patent Application Publication No. 4-183680 A (JP 4-183680 A)).

In the conventional neutral position locking apparatus, an axial force, which is a force in the rack axis direction, acts on the rack shaft. At this time, the restriction pin moves on the slant face of the tapered pin-receiving portion, which raises the possibility that the restriction pin will come out of the pin-receiving portion.

Furthermore, EP 2 537 733 A1 describes a rear wheel steering system that restricts a movement in a rack axis direction, of a rack shaft that steers rear wheels, the neutral position locking apparatus comprising: a restriction pin having a pin-sidewall portion that restricts the movement of the rack shaft in the rack axis direction at a neutral position and at a restriction position in which the rack shaft is offset from the neutral position in the axial direction; a pin-receiving portion formed in the rack shaft and having a first shaft-sidewall portion that restricts the movement of the rack shaft in the rack axis direction by making contact with the pin-sidewall portion when the rack shaft is located at the neutral position, and a second shaft-sidewall portion that restricts the movement of the rack shaft by making contact with the pin-sidewall portion when the rack shaft is located at the restriction position; and a driving device that moves the restriction pin in a projection direction in which the restriction pin moves toward the pin-receiving portion and in a removal direction in which the restriction pin moves away from the pin-receiving portion.

The invention provides a neutral position locking apparatus in which a restriction pin is less likely to come out of a pin-receiving portion. Such a neutral position locking apparatus is defined in claim 1, or any one of the dependent claims. The invention also provides a rear wheel steering system, including the neutral position locking apparatus, as defined in claim 9.

The foregoing and further objects, features and advantages of the invention will become apparent from the following description of example embodiments with reference to the accompanying drawings, wherein like numerals are used to represent like elements and wherein:
FIG. 1 is a diagram showing the configuration a vehicle including a rear wheel steering system according to a first embodiment of the invention;
FIG. 2 is a sectional view of a neutral position locking apparatus according to the first embodiment, showing the configuration of the neutral position locking apparatus when a restriction pin is housed in a housing;
FIG. 3 is a sectional view of the neutral position locking apparatus according to the first embodiment, showing the configuration of the neutral position locking apparatus when the movement of a rack shaft in the rack axis direction is restricted at a neutral position;
FIG. 4 is a sectional view of the neutral position locking apparatus according to the first embodiment, showing the configuration of the neutral position locking apparatus when the movement of the rack shaft in the rack axis direction is restricted at a left restriction position;
FIG. 5 is a sectional view taken along the line D5-D5 in FIG. 4;
FIG. 6 is a sectional view of a neutral position locking apparatus according to a second embodiment of the invention, showing the configuration of the neutral position locking apparatus when the movement of a rack shaft in the rack axis direction is restricted at a neutral position;
FIG. 7 is a sectional view of the neutral position locking apparatus according to the second embodiment, showing the magnification of a first pin-sidewall portion of a restriction pin;
FIG. 8 is a sectional view of a neutral position locking apparatus according to another embodiment, showing the configuration of the neutral position locking apparatus when the movement of a rack shaft in the rack axis direction is restricted at a neutral position; and
FIG. 9 is a sectional view of a neutral position locking apparatus according to another embodiment, showing the configuration of the neutral position locking apparatus when the movement of a rack shaft in the rack axis direction is restricted at a neutral position.

Hereinafter, embodiments of the invention will be described with reference to the accompanying drawings.

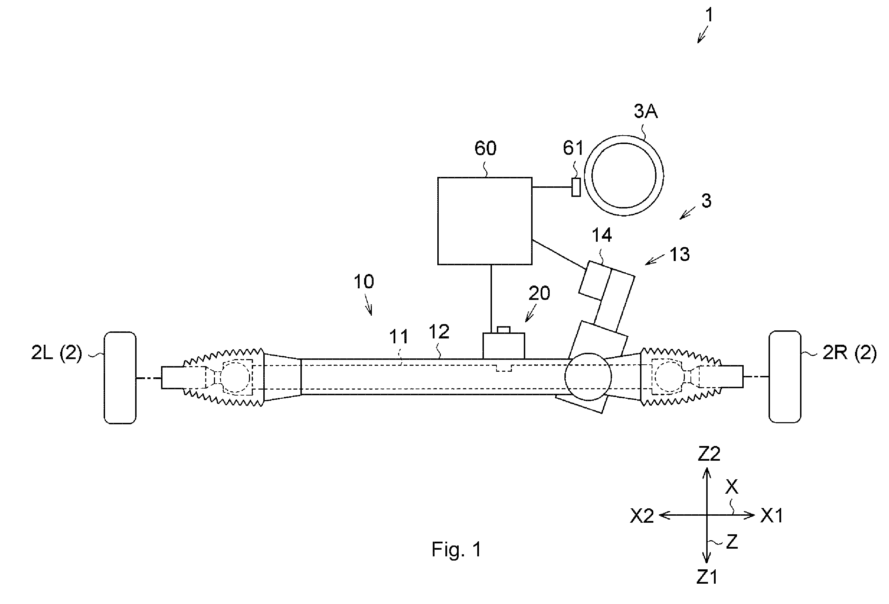

A first embodiment of the invention will be described below. With reference to FIG. 1, description will be provided regarding the configuration of a vehicle 1 of which the front wheels and rear wheels serve as steered wheels. The vehicle 1 includes wheels 2 (i.e., a right rear wheel 2R, a left rear wheel 2L, a right front wheel (not shown), and a left front wheel (not shown)), a steering system 3, a rear wheel steering system 10, a control device 60, and a rotation angle sensor 61 for a steering wheel 3A.

The right front wheel and the left front wheel are arranged in a rack axis direction X, which is the lateral direction of the vehicle 1, at positions forward of the right rear wheel 2R and the left rear wheel 2L, respectively. The right front wheel is connected to an end portion of a front wheel steering apparatus (not shown), the end portion being on the right side X1, which is one side in the rack axis direction X of the vehicle 1. The left front wheel is connected to an end portion of the front wheel steering apparatus (not shown), the end portion being on the left side X2, which is the other side in the rack axis direction X of the vehicle 1.

The right rear wheel 2R and the left rear wheel 2L are arranged in the rack axis direction X. The right rear wheel 2R is connected to an end portion of the rear wheel steering system 10 of the vehicle 1, the end portion being on the right side X1. The left rear wheel 2L is connected to an end portion of the rear wheel steering system 10 of the vehicle 1, the end portion being on the left side X2.

The rotation angle sensor 61 outputs a signal based on an operation amount of the steering wheel 3A to the control device 60. The control device 60 controls the rear wheel steering system 10 based on the signal output from the rotation angle sensor 61 for the steering wheel 3A to change the steered angle of the right rear wheel 2R and the left rear wheel 2L. Further, the control device 60 controls the rear wheel steering system 10 based on the travelling state of the vehicle 1 to lock (fix) the steered angle of the right rear wheel 2R and the left rear wheel 2L.

The steering system 3 includes the steering wheel 3A that is operated by a driver to steer the vehicle 1. The steering system 3 changes the steered angle of the right front wheel and the left front wheel via the front wheel steering apparatus based on an operation state of the steering wheel 3A. The steering system 3 changes the steered angle of the right rear wheel 2R and the left rear wheel 2L via the rear wheel steering system 10 based on the operation state of the steering wheel 3A.

The rear wheel steering system 10 includes a rack shaft 11, a rack housing 12, a steered angle transfer mechanism 13, and a neutral position locking apparatus 20. The steered angle transfer mechanism 13 includes a motor 14. The motor 14 is driven in response to a signal from the control device 60.

The rack housing 12 is fixed to a body of the vehicle 1. The rack shaft 11 extends along the rack axis direction X within the rack housing 12. The rack shaft 11 is movable relative to the rack housing 12 in the rack axis direction X. The right rear wheel 2R and the left rear wheel 2L are connected, respectively, to an end portion of the rack shaft 11, the end portion being on the right side X1, and to an end portion thereof on the left side X2. The position of the rack shaft 11 in the rack axis direction X, is changed in the direction toward the right side X1 or in the direction toward the left side X2 as the motor 14 is driven.

The positions of the rack shaft 11 in the rack axis direction X include a neutral position, restriction positions, a left-turning position that is offset from the neutral position in the direction toward the right side X1, and a right-turning position that is offset from the neutral position in the direction toward the left side X2. The restriction positions include a right restriction position at which the position of the rack shaft 11 in the rack axis direction X is offset from the neutral position in the direction toward the right side X1, and a left restriction position at which the position of the rack shaft 11 in the rack axis direction X is offset from the neutral position in the direction toward the left side X2.

Each knuckle arm (not shown) of the rear wheel steering system 10 is located forward of a corresponding king pin shaft (not shown). Therefore, when the position of the rack shaft 11 in the rack axis direction X is located at the left-turning position, the steered angle of the right rear wheel 2R and the left rear wheel 2L corresponds to left-turning. When the position of the rack shaft 11 in the rack axis direction X is located at the right-turning position, the steered angle of the right rear wheel 2R and the left rear wheel 2L corresponds to right-turning. When the position of the rack shaft 11 in the rack axis direction X is located at the neutral position, the steered angle of the right rear wheel 2R and the left rear wheel 2L corresponds to straight-ahead travelling. When the position of the rack shaft 11 in the rack axis direction X is located at the right restriction position, the steered angle of the right rear wheel 2R and the left rear wheel 2L corresponds to a travelling state that is included in left-turning and that is close to straight-ahead travelling. When the position of the rack shaft 11 in the rack axis direction X is located at the left restriction position, the steered angle of the right rear wheel 2R and the left rear wheel 2L corresponds to a travelling state that is included in right-turning and that is close to straight-ahead travelling.

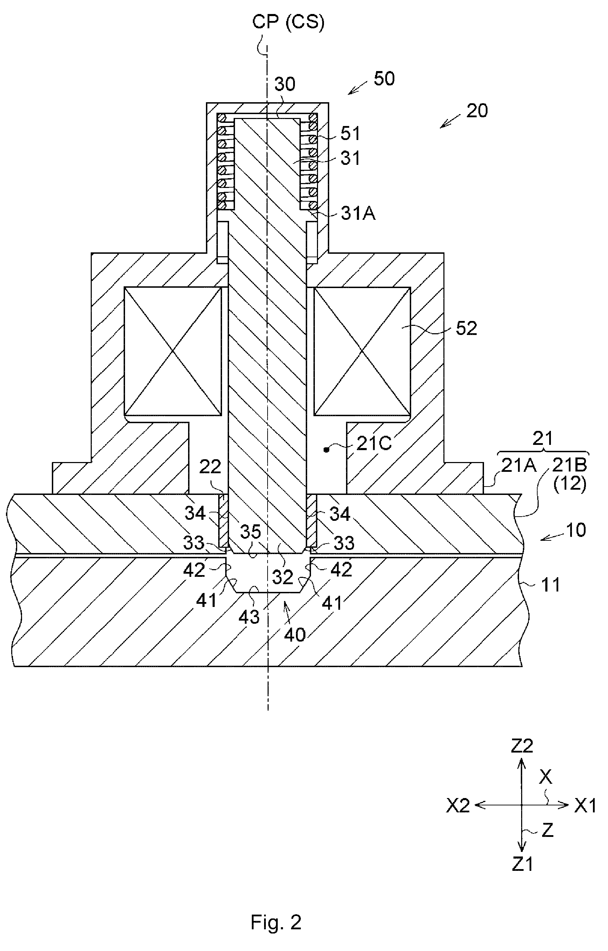

With reference to FIG. 2, the configuration of the neutral position locking apparatus 20 will be described below. The neutral position locking apparatus 20 includes a housing 21, a bush 22, a restriction pin 30, a pin-receiving portion 40, and a pin-driving device 50. The neutral position locking apparatus 20 restricts the movement of the rack shaft 11 in the rack axis direction X at the neutral position, the right restriction position, or the left restriction position. Note that the neutral position, the right restriction position, and the left restriction position indicate positions of the rack shaft 11 in the rack axis direction X, relative to the rack housing 12.

The housing 21 has a first housing 21A, a second housing 21B, and a housing space 21C formed inside the housing 21. The first housing 21 A houses a pin base end portion 31, which is one end of the restriction pin 30, and the pin-driving device 50.

The second housing 21B constitutes a part of the rack housing 12. The bush 22, into which a pin distal end portion 32, that is, the other end of the restriction pin 30 is inserted, is attached to the second housing 21B.

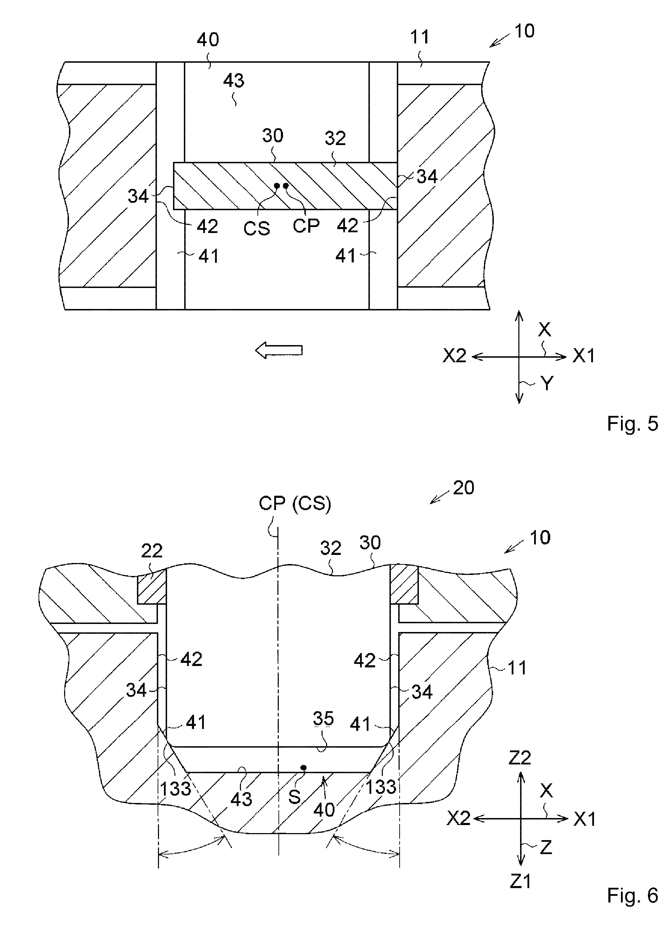

The restriction pin 30 has the pin base end portion 31 and the pin distal end portion 32. The cross section of the restriction pin 30, which is perpendicular to a pin axis CP of the restriction pin 30, is rectangular (see FIG. 5). The restriction pin 30 moves in a projection direction Z1 in which is the restriction pin 30 moves toward the rack shaft 11, or in a removal direction Z2 in which the restriction pin 30 moves away from the rack shaft 11, along a direction extending along the pin axis CP (hereinafter, referred to as "pin axis direction Z").

The pin base end portion 31 has a spring stop portion 31A that projects radially outward from the outer periphery of the restriction pin 30. The pin base end portion 31 is housed in the housing space 21C all the time. The pin distal end portion 32 has two first pin-sidewall portions 33, two second pin-sidewall portions 34, and a distal end face 35.

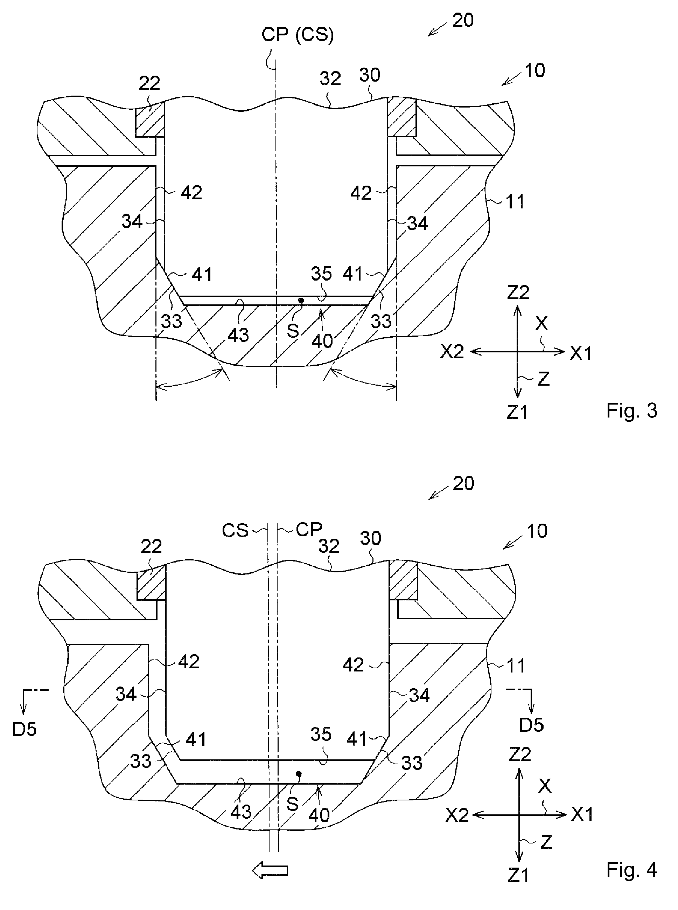

Each of the first pin-sidewall portions 33 is formed as a slant face slanted at a slant angle larger than 0 degrees but smaller than 90 degrees with respect to the pin axis CP (see FIG. 3). One of the first pin-sidewall portions 33 is formed at an end portion of the pin distal end portion 32, the end portion being on the right side X1. The other one of the first pin-sidewall portions 33 is formed at an end portion of the pin distal end portion 32, the end portion being on the left side X2.

Each of the second pin-sidewall portions 34 is formed as a surface parallel to the pin axis CP and perpendicular to the rack axis direction X. One of the second pin-sidewall portions 34 is formed at an end portion of the pin distal end portion 32, the end portion being on the right side X1. The other one of the second pin-sidewall portions 34 is formed at an end portion of the pin distal end portion 32, the end portion being on the left side X2. The length of each second pin-sidewall portion 34 along the pin axis direction Z is greater than the length of each first pin-sidewall portion 33 along the pin axis direction Z.

The distal end face 35 is formed as a surface perpendicular to the pin axis CP and parallel to the rack axis direction X. The second pin-sidewall portion 34 on the right side X1, the first pin-sidewall portion 33 on the right side X1, and a portion of the distal end face 35, the portion being on the right side X1, are formed continuously in this order from the pin base end portion 31 side toward the pin distal end portion 32 side, at the end portion of the pin distal end portion 32, the end portion being on the right side X1. The second pin-sidewall portion 34 on the left side X2, the first pin-sidewall portion 33 on the left side X2, and a portion of the distal end face 35, the portion being on the left side X2, are formed continuously in this order from the pin base end portion 31 side toward the pin distal end portion 32 side, at the end portion of the pin distal end portion 32, the portion being on the left side X2. The first pin-sidewall portion 33 and the second pin-sidewall portion 34, which are on the right side X1, are symmetrical, in the rack axis direction X, to the first pin-sidewall portion 33 and the second pin-sidewall portion 34, which are on the left side X2, with respect to the pin axis CP of the restriction pin 30.

The state of the first pin-sidewall portions 33, the second pin-sidewall portions 34, and the distal end face 35 is switched between the state where they project from the housing space 21C and the state where they are housed in the housing space 21C, as the restriction pin 30 moves in the pin axis direction Z.

The pin-receiving portion 40 is formed as a groove of the rack shaft 11. The pin-receiving portion 40 has two first shaft-sidewall portions 41, two second shaft-sidewall portions 42, and a bottom face 43. As illustrated in FIG. 5, the section of the pin-receiving portion 40, which is parallel to the rack axis direction X, is rectangular. The size of the pin-receiving portion 40 is larger than the size of the pin distal end portion 32 in the rack axis direction X.

Each of the first shaft-sidewall portions 41 is formed as a slant face slanted at a slant angle larger than 0 degrees but smaller than 90 degrees with respect to the pin axis CP (see FIG. 3). One of the first shaft-sidewall portions 41 is formed at an end portion of the pin-receiving portion 40, the end portion being on the right side X1. The other one of the first shaft-sidewall portions 41 is formed at an end portion of the pin-receiving portion 40, the end portion being on the left side X2.

Each of the second shaft-sidewall portions 42 is formed as a surface parallel to the pin axis CP and perpendicular to the rack axis direction X. One of the second shaft-sidewall portions 42 is formed at an end portion of the pin-receiving portion 40, the end portion being on the right side X1. The other one of the second shaft-sidewall portions 42 is formed at an end portion of the pin-receiving portion 40, the end portion being on the left side X2. The length of each second shaft-sidewall portion 42 along the pin axis direction Z is greater than the length of each first shaft-sidewall portion 41 along the pin axis direction Z.

The bottom face 43 is formed as a surface perpendicular to the pin axis CP and parallel to the rack axis direction X. The second shaft-sidewall portion 42 on the right side X1, the first shaft-sidewall portion 41 on the right side X1, and the bottom face 43 are formed continuously in this order from the opening side toward the bottom face 43 side, at the end portion of the pin-receiving portion 40, the end portion being on the right side X1. The second shaft-sidewall portion 42 on the left side X2, the first shaft-sidewall portion 41 on the left side X2, and the bottom face 43 are formed continuously in this order from the opening side toward the bottom face 43 side, at the end portion of the pin-receiving portion 40, the end portion being on the left side X2. The first shaft-sidewall portion 41 and the second shaft-sidewall portion 42, which are on the right side X1, are symmetrical to the first shaft-sidewall portion 41 and the second shaft-sidewall portion 42, which are on the left side X2, with respect to a receiving portion central axis CS that passes through the center of the bottom face 43 of the pin-receiving portion 40 and that is parallel to the pin axis direction Z.

The pin-driving device 50 includes a spring 51 and a solenoid 52. The spring 51 is housed in the housing space 21C so as to be located outward of the spring stop portion 31A in the removal direction Z2. The spring 51 is attached to the spring stop portion 31A within the housing space 21C. The spring 51 applies a force in the projection direction Z1, to the restriction pin 30 via the spring stop portion 31A.

The solenoid 52 is housed in the housing space 21C so as to be located inward of the spring stop portion 31A in the projection direction Z1. The solenoid 52 is fixed to the housing 21 so as to surround the outer periphery of the pin base end portion 31. When a current is supplied to the solenoid 52, the solenoid 52 applies a force in the removal direction Z2, to the restriction pin 30.

The control device 60 restricts the movement of the rack shaft 11 in the rack axis direction X, based on the travelling state of the vehicle 1. The control device 60 allows the movement of the rack shaft 11 in the rack axis direction X, based on the travelling state of the vehicle 1. More specifically, when the control device 60 allows the rack shaft 11 to move in the rack axis direction X, the control device 60 starts applying a current to the solenoid 52. When the control device 60 restricts the movement of the rack shaft 11 in the rack axis direction X, the control device 60 stops applying a current to the solenoid 52.

With reference to FIG. 3, the operation of the neutral position locking apparatus will be described. FIG. 3 illustrates the state where the movement of the rack shaft 11 is restricted at the neutral position. When no current is supplied to the solenoid 52, the restriction pin 30 projects in the projection direction Z1 by being urged by the spring 51.

The position of the rack shaft 11 in the rack axis direction X is locked (fixed) at the neutral position due to friction generated by contact between the first pin-sidewall portion 33 on the right side X1 and the first shaft-sidewall portion 41 on the right side X1, and friction generated by contact between the first pin-sidewall portion 33 on the left side X2 and the first shaft-sidewall portion 41 on the left side X2. At this time, the first pin-sidewall portions 33 are in surface contact with the first shaft-sidewall portions 41.

When the position of the rack shaft 11 in the rack axis direction X is locked at the neutral position, a space S is formed between the distal end face 35 and the bottom face 43 in the neutral position locking apparatus 20. That is, the neutral position locking apparatus 20 is configured such that when the position of the rack shaft 11 in the rack axis direction X is locked at the neutral position, the distal end face 35 does not contact the bottom face 43.

In the state where the rack shaft 11 is locked at the neutral position, when an axial force exerted on the rack shaft 11 in the direction toward the right side X1 or the direction toward the left side X2 exceeds a force of friction between the first pin-sidewall portion 33 and the first shaft-sidewall portion 41, the first pin-sidewall portion 33 slides on the first shaft-sidewall portion 41. This causes the rack shaft 11 to move in a direction in which the axial force acts on the restriction pin 30. At this time, the second shaft-sidewall portion 42 contacts the second pin-sidewall portion 34, so that a further movement of the rack shaft 11 is prevented. That is, the rack shaft 11 is locked at a restriction position that is offset from the neutral position.

FIG. 4 and FIG. 5 illustrate the state of the neutral position locking apparatus 20 when the rack shaft 11 is locked at the left restriction position. Note that the state of the neutral position locking apparatus 20 when the rack shaft 11 is locked at the right restriction position is symmetrical to the state of the neutral position locking apparatus 20 when the rack shaft 11 is locked at the left restriction position.

As illustrated in FIG. 4, when an axial force in the direction toward the left side X2 acts on the rack shaft 11, the second pin-sidewall portion 34 on the right side X1 contacts the second shaft-sidewall portion 42 on the right side X1. At this time, as illustrated in FIG. 5, the second pin-sidewall portion 34 on the right side X1 makes surface contact with the second shaft-sidewall portion 42 on the right side X1. Due to the contact between the second pin-sidewall portion 34 on the right side X1 and the second shaft-sidewall portion 42 on the right side X1, the rack shaft 11 is prevented from moving beyond the left restriction position in the direction toward the left side X2. That is, the position of the rack shaft 11 in the rack axis direction X is locked at the left restriction position.

When an axial force in the direction toward the right side X1 acts on the rack shaft 11, the second pin-sidewall portion 34 on the left side X2 contacts the second shaft-sidewall portion 42 on the left side X2. At this time, the second pin-sidewall portion 34 on the left side X2 makes surface contact with the second shaft-sidewall portion 42 on the left side X2. Due to the contact between the second pin-sidewall portion 34 on the left side X2 and the second shaft-sidewall portion 42 on the left side X2, the rack shaft 11 is prevented from moving beyond the right restriction position in the direction toward the right side X1. That is, the position of the rack shaft 11 in the rack axis direction X is locked at the right restriction position.

The operation of the neutral position locking apparatus 20 will be described below. Each first pin-sidewall portion 33 and each first shaft-sidewall portion 41 are slanted with respect to the pin axis CP. Therefore, when the restriction pin 30 moves in the projection direction Z1 in a state where the pin axis CP does not coincide with the receiving-portion central axis CS and the position of the rack shaft 11 in the rack axis direction X is within a range between the right restriction position and the left restriction position, one of the first pin-sidewall portions 33 contacts a corresponding one of the first shaft-sidewall portions 41. A force in the projection direction Z1 is applied to the restriction pin 30 by the spring 51. Accordingly, the first pin-sidewall portion 33 slides on the first shaft-sidewall portion 41. The restriction pin 30 moves in the projection direction Z1, and the rack shaft 11 moves in the rack axis direction X. Thus, the position of the rack shaft 11 in the rack axis direction X is guided to the neutral position at which the pin axis CP coincides with the receiving-portion central axis CS.

At the neutral position, a frictional force between the first pin-sidewall portion 33 and the first shaft-sidewall portion 41 on the right side X1, and a frictional force between the first pin-sidewall portion 33 and the first shaft-sidewall portion 41 on the left side X2 are generated. Therefore, the position of the rack shaft 11 in the rack axis direction X is less likely to be shifted in the direction toward the right side X1 and the direction toward the left side X2. Accordingly, the rack shaft 11 is maintained at the neutral position even if a small axial force in the rack axis direction X acts on the rack shaft 11 due to vibrations or the like caused by travelling on a rough road.

When the movement of the rack shaft 11 in the rack axis direction X is restricted at the neutral position, a large axial force acts on the rack shaft 11 in some cases. At this time, the rack shaft 11 is displaced from the neutral position, and one of the second pin-sidewall portions 34 contacts a corresponding one of the second shaft-sidewall portions 42.

Each second pin-sidewall portion 34 and each second shaft-sidewall portion 42 are parallel to the pin axis CP. Therefore, a component force that moves the restriction pin 30 in the removal direction Z2 is not generated from a point of contact between the second pin-sidewall portion 34 and the second shaft-sidewall portion 42. That is, the restriction pin 30 and the pin-receiving portion 40 are configured such that a force in the removal direction Z2, which each of the second pin-sidewall portions 34 receives from a corresponding one of the second shaft-sidewall portions 42, is zero. Therefore, when the right rear wheel 2R or the left rear wheel 2L runs onto, for example, a curbstone and a large axial force acts on the rack shaft 11, the restriction pin 30 is less likely to come out of the pin-receiving portion 40 in comparison with a configuration where each second pin-sidewall portion 34 and each second shaft-sidewall portion 42 are slanted.

The rear wheel steering system 10 according to the present embodiment produces the following effects.
(1) The restriction pin 30 and the pin-receiving portion 40 are configured such that a force in the removal direction Z2, which each of the second pin-sidewall portions 34 receives from a corresponding one of the second shaft-sidewall portions 42, is zero. Therefore, when an axial force acts on the rack shaft 11, the restriction pin 30 is less likely to come out of the pin-receiving portion 40 in comparison with a locking apparatus that does not have the second pin-sidewall portions 34 and the second shaft-sidewall portions 42.
(2) The neutral position locking apparatus 20 is configured such that the second pin-sidewall portion 34 and the second shaft-sidewall portion 42, which are parallel to the pin axis CP, contact each other when the position of the rack shaft 11 is at the restriction position. Each second shaft-sidewall portion 42 is parallel to the pin axis CP. Therefore, the restriction pin 30 is less likely to come out of the pin-receiving portion 40 in comparison with a configuration where the entirety of each wall portion of the pin-receiving portion 40 is formed as a slant face. Further, the restriction pin 30 is pushed in the projection-direction-Z1 by the spring 51. Accordingly, the rack shaft 11 is maintained at the neutral position by the frictional forces generated between the first pin-sidewall portions 33 and the first shaft-sidewall portions 41, when a relatively small axial force acts on the rack shaft 11.
(3) When the rack shaft 11 is located at a restriction position, one of the second pin-sidewall portions 34 of the neutral position locking apparatus 20 makes surface contact with a corresponding one of the second shaft-sidewall portions 42. That is, the area of contact between the second pin-sidewall portion 34 and the second shaft-sidewall portion 42 is larger than that in a case where the second pin-sidewall portion 34 makes line contact with the second shaft-sidewall portion 42, for example, in a case where the entirety of each wall portion of the pin-receiving portion 40 is formed as a slant face. Therefore, the restriction pin 30 is much less likely to come out of the pin-receiving portion 40 when a large axial force acts on the rack shaft 11.
(4) In the neutral position locking apparatus 20, when the first pin-sidewall portion 33 contact the first shaft-sidewall portion 41, the space S is formed between the distal end face 35 and the bottom face 43. Accordingly, it is possible to reduce the possibility that when the position of the rack shaft 11 in the rack axis direction X is located at the neutral position, the first pin-sidewall portions 33 come off the first shaft-sidewall portions 41 due to errors caused by dimensional variations.
(5) The pin-receiving portion 40 of the neutral position locking apparatus 20 is configured such that the length of each second shaft-sidewall portion 42 along the pin axis direction Z is greater than the length of each first shaft-sidewall portion 41 along the pin axis direction Z. Accordingly, the area of contact between the second pin-sidewall portions 34 and the second shaft-sidewall portion 42 is larger than that in a configuration where the length of each second shaft-sidewall portion 42 along the pin axis direction Z is smaller than the length of each first shaft-sidewall portion 41 along the pin axis direction Z. Therefore, the restriction pin 30 is deeply caught in the pin-receiving portion 40 when one of the second pin-sidewall portions 34 contacts a corresponding one of the second shaft-sidewall portions 42. Therefore, the restriction pin 30 is less likely to come out of the pin-receiving portion 40.
(6) In a section along the rack axis direction X, the size of the opening of the pin-receiving portion 40 in the rack axis direction X is larger than the size of the pin distal end portion 32 in the rack axis direction X. This makes it possible to fit the restriction pin 30 in the pin-receiving portion 40 even if the receiving-portion central axis CS does not coincide with the pin axis CP in the rack axis direction X. Further, when the restriction pin 30 is fitted in the pin-receiving portion 40 in the state where the receiving-portion central axis CS does not coincide with the pin axis CP in the rack axis direction X, one of the first shaft-sidewall portion 41 slides on a corresponding one of the first pin-sidewall portions 33. As a result, the receiving-portion central axis CS of the rack shaft 11 moves to a position where the receiving-portion central axis CS coincides with the pin axis CP.
(7) The size of the pin-receiving portion 40 in the rack axis direction X is larger than the size of the pin distal end portion 32 in the rack axis direction X. Accordingly, in the neutral position locking apparatus 20, it is possible to fit the restriction pin 30 in the pin-receiving portion 40 when the position of the rack shaft 11 in the rack axis direction X is located within a range between the right restriction position and the left restriction position. Therefore, it is possible to reduce the possibility that the restriction pin 30 will not be fitted in the pin-receiving portion 40, in comparison with a configuration where the size of the pin-receiving portion 40 in the rack axis direction X is the same as the size of the pin distal end portion 32 in the rack axis direction X.

A second embodiment of the invention will be described below. A neutral position locking apparatus 20 according to the second embodiment differs from the neutral position locking apparatus 20 according to the first embodiment in the following configurations. The configurations of the neutral position locking apparatus 20 according to the second embodiment other than the differences described below are the same as the configurations of the neutral position locking apparatus 20 according to the first embodiment. That is, in the neutral position locking apparatus 20 according to the second embodiment, each first pin-sidewall portion 133 of the restriction pin 30 is curved. Note that, in the description regarding the neutral position locking apparatus 20 according to the second embodiment, the configurations that are the same as those of the neutral position locking apparatus 20 according to the first embodiment will be denoted by the same reference numerals as those in the neutral position locking apparatus 20 according to the first embodiment.

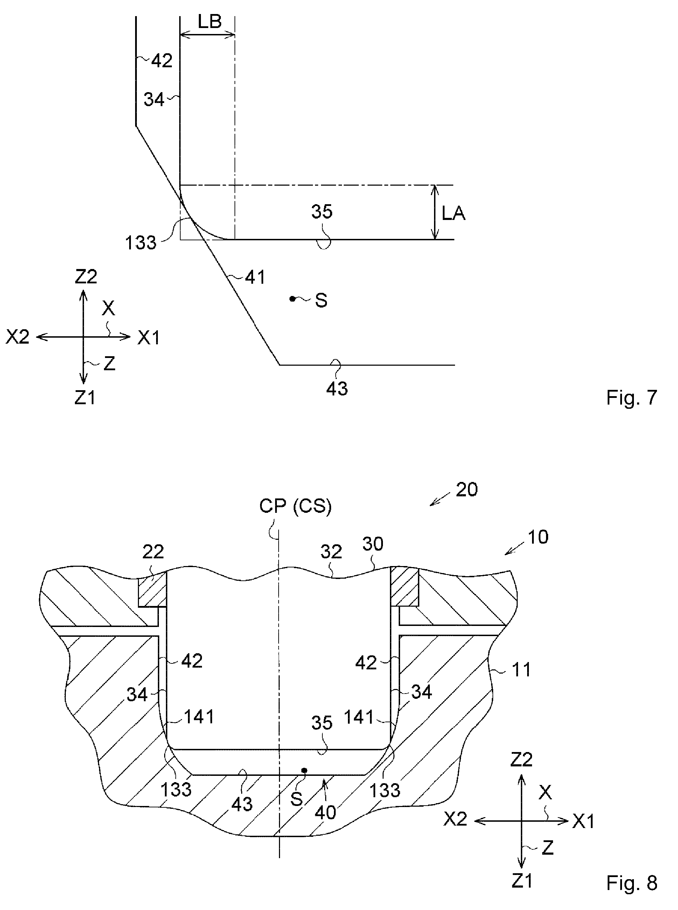

With reference to FIG. 6 and FIG. 7, the configuration of the neutral position locking apparatus 20 will be described. As illustrated in FIG. 6, the restriction pin 30 has the pin base end portion 31 and the pin distal end portion 32. The pin distal end portion 32 has two first pin-sidewall portions 133, the two second pin-sidewall portions 34, and the distal end face 35.

As illustrated in FIG. 7, each of the first pin-sidewall portions 133 has a curved shape. Each of the first pin-sidewall portions 133 is configured such that a size LB along the rack axis direction X is equal to a size LA along the pin axis direction Z. Each of the first pin-sidewall portions 133 is formed in an arc shape. One of the first pin-sidewall portions 133 is formed at an end portion of the pin distal end portion 32, the end portion being on the right side X1. The other one of the first pin-sidewall portions 133 is formed at an end portion of the pin distal end portion 32, the end portion being on the left side X2.

With reference to FIG. 6, the operation of the neutral position locking apparatus 20 will be described. FIG. 6 illustrates the state where the movement of the rack shaft 11 is restricted at the neutral position. When no current is supplied to a solenoid 52, the restriction pin 30 projects in the projection direction Z1 by being urged by the spring 51.

The position of the rack shaft 11 in the rack axis direction X is locked (fixed) at the neutral position due to friction generated by contact between the first pin-sidewall portion 133 and the first shaft-sidewall portion 41, which are on the right side X1, and friction generated by contact between the first pin-sidewall portion 133 and the first shaft-sidewall portion 41, which are on the left side X2. At this time, each first pin-sidewall portion 133 makes line contact with a corresponding one of the first shaft-sidewall portions 41 along a depth direction Y (see FIG. 5) perpendicular to the rack axis direction X and the pin axis direction Z.

In the neutral position locking apparatus 20, when the position of the rack shaft 11 in the rack axis direction X is locked at the neutral position, the space S is formed between the distal end face 35 and the bottom face 43. That is, in the neutral position locking apparatus 20, when the position of the rack shaft 11 in the rack axis direction X is locked at the neutral position, the distal end face 35 does not contact the bottom face 43.

In the state where the rack shaft 11 is locked at the neutral position, when an axial force exerted on the rack shaft 11 in the direction toward the right side X1 or in the direction toward the left side X2 exceeds a frictional force between the first pin-sidewall portion 133 and the first shaft-sidewall portion 41, the first pin-sidewall portion 133 slides on the first shaft-sidewall portion 41. This causes the rack shaft 11 to move in a direction in which the axial force acts on the restriction pin 30. At this time, the second shaft-sidewall portion 42 contacts the second pin-sidewall portion 34, so that a further movement of the rack shaft 11 is prevented. That is, the rack shaft 11 is locked at a restriction position that is offset from the neutral position.

The neutral position locking apparatus 20 according to the second embodiment produces the following effects, in addition to the effects (1) to (7) of the first embodiment.
(8) In the neutral position locking apparatus 20, each first pin-sidewall portion 133 has a curved shape. Each first shaft-sidewall portion 41 is slanted with respect to the pin axis CP. The first shaft-sidewall portion 41 is slanted with respect to the pin axis CP also in the depth direction Y. Accordingly, each first shaft-sidewall portion 41 has a planar shape. Thus, each first pin-sidewall portion 133 makes line contact with a corresponding one of the first shaft-sidewall portions 41. Therefore, it is possible to reduce the possibility that the first pin-sidewall portions 133 will not make contact with the first shaft-sidewall portions 41 appropriately due to dimensional variations, in comparison with a configuration where the first pin-sidewall portions 133 make surface contact with the first shaft-sidewall portions 41. In other words, it is possible to easily manage dimensions in the neutral position locking apparatus 20, in comparison with a configuration where each first pin-sidewall portion 133 and each first shaft-sidewall portion 41 both have a planar shape.

Other embodiments of the invention will be described below. The invention includes embodiments other than the above-described embodiments. Modified examples of the above-described embodiments will be described as other embodiments of the invention. Note that the following modified examples may be employed in combination.

Each second shaft-sidewall portion 42 according to the first embodiment is parallel to the pin axis CP. On the other hand, a second shaft-sidewall portion 42 according to a modified example is slanted with respect to the pin axis CP. When the slant angle of each first shaft-sidewall portion 41 is a first slant angle, a second slant angle, which is the slant angle of each second shaft-sidewall portion 42, is smaller than the first slant angle. In other words, the pin-receiving portion 40 is slanted at portions including the first shaft-sidewall portions 41 and the second shaft-sidewall portions 42. In this case, each second pin-sidewall portion 34 is also slanted with respect to the pin axis CP. The slant angle of each second pin-sidewall portion 34 corresponds to the second slant angle.

The neutral position locking apparatus 20 according to this modified example has the second shaft-sidewall portions 42, which are slanted at the second slant angle that is smaller than the first slant angle of the first shaft-sidewall portion 41. When an axial force acts on the rack shaft 11, the second pin-sidewall portion slanted at the second slant angle contacts the second shaft-sidewall portion. Accordingly, a force in the removal direction Z2, which the second pin-sidewall portion 34 receives from the second shaft-sidewall portion 42, is smaller than a force in the removal direction Z2, which the first pin-sidewall portion 33 receives from the first shaft-sidewall portion 41. Therefore, the restriction pin 30 is less likely to come out of the pin-receiving portion 40, in comparison with a configuration where the entirety of the pin-receiving portion 40 is slanted at the first slant angle.

The second pin-sidewall portion 34 and the second shaft-sidewall portion 42 according to the first embodiment make surface contact with each other. On the other hand, the second pin-sidewall portion 34 and the second shaft-sidewall portion 42 according to a modified example make line contact with each other. In this case, the section of the pin distal end portion 32, which is perpendicular to the pin axis direction Z, has an elliptical shape.

Each first shaft-sidewall portion 41 according to the first embodiment is slanted with respect to the pin axis CP. On the other hand, each first shaft-sidewall portion 141 according to a modified example has a curved shape. In this modified example, an end portion of each first pin-sidewall portion 133, the end portion being on the second pin-sidewall portion 34 side, and an end portion thereof on the distal end face 35 side make line contact with a corresponding one of the first shaft-sidewall portions 141.

Each first shaft-sidewall portion 41 according to the second embodiment is slanted with respect to the pin axis CP. On the other hand, each first shaft-sidewall portion 141 according to the modified example as illustrated in FIG. 8 has a curved shape. The curvature of each first shaft-sidewall portion 141 is equal to or smaller than the curvature of each first pin-sidewall portion 133. Note that when the curvature of each first shaft-sidewall portion 141 is equal to the curvature of each first pin-sidewall portion 133, the first pin-sidewall portion 133 makes surface contact with the first shaft-sidewall portion 141.

Each first pin-sidewall portion 133 according to the second embodiment has a precise circle shape. On the other hand, each first pin-sidewall portion 133 according to a modified example has an elliptical shape or a parabolic shape. In short, any shape may be adopted at the shape of each first pin-sidewall portion 133 as long as the shape allows the first pin-sidewall portion 133 to make line contact with the first shaft-sidewall portion 41.

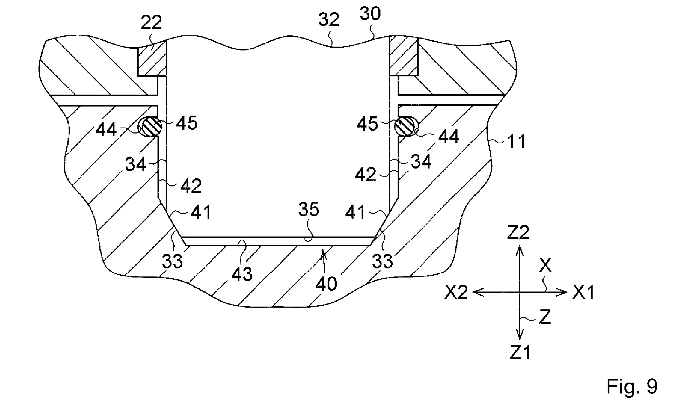

The neutral position locking apparatus 20 according to each of the above-described embodiments has the second pin-sidewall portions 34 and the second shaft-sidewall portions 42, which entirely make direct contact with each other. On the other hand, in a neutral position locking apparatus 20 according to a modified example as illustrated in FIG. 9, a buffer member 45 is attached to a part of each second shaft-sidewall portion 42. Each second shaft-sidewall portion 42 has a groove 44 extending in the depth direction Y. Each buffer member 45 is fitted in a corresponding one of the grooves 44. Each buffer member 45 is made of, for example, a rubber member. In the neutral position locking apparatus 20 according to this modified example, it is possible to reduce an impact caused by contact between the second pin-sidewall portion 34 and the pin-receiving portion 40 when the second pin-sidewall portion 34 moves toward the second shaft-sidewall portion 42, in comparison with a configuration where there is no buffer member 45. Note that, in a part to which the buffer member 45 is not attached, the second pin-sidewall portion 34 contacts the second shaft-sidewall portion 42. This modified example will be referred to as a modified example Q.

Instead of or in addition to the buffer members 45 in the modified example Q, buffer members 45 may be attached to the second pin-sidewall portions 34. In this case, grooves 44 are formed in the second pin-sidewall portions 34, and each buffer member 45 is fitted in a corresponding one of the grooves 44.

In the neutral position locking apparatus 20 according to each of the above-described embodiments, the bush 22 is directly fixed to the second housing 21B. On the other hand, in a neutral position locking apparatus 20 according to a modified example, a rubber member is provided between the bush 22 and a second housing 21 B.

The sections of the restriction pin 30 and the pin-receiving portion 40 according to each of the above-described embodiments, the sections being perpendicular to the pin axis direction Z, are rectangular. On the other hand, the sections of a restriction pin 30 and a pin-receiving portion 40 according to a modified example, the sections being perpendicular to the pin axis direction Z, are ellipsoidal.

In the neutral position locking apparatus 20 according to the above-described embodiments, when the position of the rack shaft 11 in the rack axis direction X is locked at the neutral position, the space S is formed between the distal end face 35 and the bottom face 43. On the other hand, in a neutral position locking apparatus 20 according to a modified example, when the position of the rack shaft 11 is locked at the neutral position, a space S is not formed between the distal end face 35 and the bottom face 43. That is, the distal end face 35 contacts the bottom face 43.

The neutral position locking apparatus 20 according to each of the above-described embodiments has the distal end face 35 and the bottom face 43 between the first pin-sidewall portion 33 (133) on the right side X1 and the first pin-sidewall portion 33 (133) on the left side X2. On the other hand, in a neutral position locking apparatus 20 according to a modified example, a first pin-sidewall portion 33 (133) on the right side X1 and a first pin-sidewall portion 33 (133) on the left side X2 are contiguous with each other at the pin axis CP. In this case, the first pin-sidewall portion 33 (133) on the right side X1 and the first pin-sidewall portion 33 (133) on the left side X2 extend to the pin axis CP. Further, a first shaft-sidewall portion 41 on the right side X1 and a first shaft-sidewall portion 41 on the left side X2 extend to the receiving-portion central axis CS. Thus, the first shaft-sidewall portion 41 on the right side X1 and the first shaft-sidewall portion 41 on the left side X2 are contiguous with each other at the receiving-portion central axis CS.

In the neutral position locking apparatus 20 according to each of the above-described embodiments, the length of each second shaft-sidewall portion 42 along the pin axis direction Z is greater than the length of each first shaft-sidewall portion 41 along the pin axis direction Z. On the other hand, in a neutral position locking apparatus 20 according to a modified example, the length of each second shaft-sidewall portion 42 along the pin axis direction Z is equal to or less than the length of each first shaft-sidewall portion 41 along the pin axis direction Z.

The pin-receiving portion 40 according to each of the above-described embodiments is formed as a groove of the rack shaft 11. On the other hand, a pin-receiving portion 40 according to a modified example is formed as a hole or a through-hole of the rack shaft 11. In the modified example in which the pin-receiving portion 40 is formed as a through-hole, the pin-receiving portion 40 does not have a bottom face 43.

The pin-receiving portion 40 according to each of the above-described embodiments is formed as a groove of the rack shaft 11. On the other hand, a pin-receiving portion 40 according to a modified example is formed as a member different from a main body of a rack shaft 11, and is attached to the outer periphery of the shaft main body of the rack shaft 11.

The pin-driving device 50 according to each of the above-described embodiments includes the solenoid 52. On the other hand, a pin-driving device 50 according to a modified example includes a hydraulic chamber, so that the restriction pin 30 is driven by oil pressure.

In the rear wheel steering system 10 according to each of the above-described embodiments, the positions of the rack shaft 11 in the rack axis direction X include the left-turning position that is offset from the neutral position in the direction toward the right side X1, and the right-turning position that is offset from the neutral position in the direction toward the left side X2. On the other hand, in a rear wheel steering system 10 according to a modified example, the positions of a rack shaft 11 in the rack axis direction X include a left-turning position that is offset from the neutral position in the direction toward the left side X2, and a right-turning position that is offset from the neutral position in the direction toward the right side X1. In the rear wheel steering system 10 according to this modified example, knuckle arms (not shown) are arranged behind corresponding king pin shafts (not shown). Therefore, when the position of the rack shaft 11 in the rack axis direction X is located at the right restriction position, the steered angle of the right rear wheel 2R and the left rear wheel 2L corresponds to a travelling state that is included in right-turning and that is close to straight-ahead travelling. When the position of the rack shaft 11 in the rack axis direction X is located at the left restriction position, the steered angle of the right rear wheel 2R and the left rear wheel 2L corresponds to a travelling state that is included in left-turning and that is close to straight-ahead travelling.

The rear wheel steering system 10 according to each of the above-described embodiments changes the position of the rack shaft 11 in the rack axis direction X under the control of the control device 60. On the other hand, a rear wheel steering system 10 according to a modified example is mechanically connected to the steering wheel 3 A.

## Claims

1. A neutral position locking apparatus (20) that restricts a movement in a rack axis direction (X), of a rack shaft (11) that steers rear wheels (2L, 2R), the neutral position locking apparatus (20) comprising:
a restriction pin (30) having a first pin-sidewall portion (33, 133) that restricts the movement of the rack shaft (11) in the rack axis direction (X) at a neutral position, and a second pin-sidewall portion (34) that restricts the movement of the rack shaft (11) in the rack axis direction (X) at a restriction position in which the rack shaft (11) is offset from the neutral position in the rack axis direction (X);
a pin-receiving portion (40) formed in the rack shaft (11) and having a first shaft-sidewall portion (41, 141) that is curved or slanted with respect to the pin axis (CP) and that restricts the movement of the rack shaft (11) in the rack axis direction (X) by making contact with the first pin-sidewall portion (33, 133) when the rack shaft (11) is located at the neutral position, and a second shaft-sidewall portion (42) that restricts the movement of the rack shaft (11) by making contact with the second pin-sidewall portion (34) when the rack shaft (11) is located at the restriction position; and
a driving device (50) that moves the restriction pin (30) in a projection direction (Z1) in which the restriction pin (30) moves toward the pin-receiving portion (40) and in a removal direction (Z2) in which the restriction pin moves away from the pin-receiving portion (40), wherein:
the restriction pin (30) and the pin-receiving portion (40) are configured such that a contact force in the removal direction (Z2), which the second pin-sidewall portion (34) receives from the second shaft-sidewall portion (42), is zero, or configured such that a contact force in the removal direction (Z2), which the second pin-sidewall portion (34) receives from the second shaft-sidewall portion (42), is smaller than a contact force in the removal direction (Z2), which the first pin-sidewall portion (33, 133) receives from the first shaft-sidewall portion (41, 141).

2. The neutral position locking apparatus (20) according to claim 1, wherein:
the first pin-sidewall portion (133) has a curved shape and is formed so as to be closer to a distal end of the restriction pin (30) than the second pin-sidewall portion (34);
the second pin-sidewall portion (34) is parallel to a pin axis (CP) that is perpendicular to the rack axis direction (X);
the first shaft-sidewall portion (41) is slanted with respect to the pin axis (CP); and
the second shaft-sidewall portion (42) is formed so as to be closer to an opening of the pin-receiving portion (40) than the first shaft-sidewall portion (41), and is parallel to the second pin-sidewall portion (34).

3. The neutral position locking apparatus (20) according to claim 1, wherein:
the first pin-sidewall portion (33) is slanted with respect to a pin axis (CP) that is perpendicular to the rack axis direction (X), and is formed so as to be closer to a distal end (35) of the restriction pin (30) than the second pin-sidewall portion (34);
the second pin-sidewall (34) portion is parallel to the pin axis (CP);
the first shaft-sidewall portion (41) is parallel to the first pin-sidewall portion (33); and
the second shaft-sidewall portion (42) is formed so as to be closer to an opening of the pin-receiving portion (40) than the first shaft-sidewall portion (41), and is parallel to the second pin-sidewall portion (34).

4. The neutral position locking apparatus (20) according to claim 1, wherein:
the first shaft-sidewall portion is slanted at a first slant angle with respect to a pin axis (CP) that is perpendicular to the rack axis direction (X);
the second shaft-sidewall portion is slanted at a second slant angle, which is smaller than the first slant angle, with respect to the pin axis (CP), and is formed so as to be closer to an opening of the pin-receiving portion (40) than the first shaft-sidewall portion (41);
the first pin-sidewall portion is curved or slanted with respect to the pin axis (CP), and is formed so as to be closer to a distal end (35) of the restriction pin (30) than the second pin-sidewall portion; and
the second pin-sidewall portion is slanted with respect to the pin axis (CP), and is parallel to the second shaft-sidewall portion (42).

5. The neutral position locking apparatus (20) according to any one of claims 1 to 4, wherein, when the rack shaft (11) is located at the restriction position, the second pin-sidewall portion (34) makes surface contact with the second shaft-sidewall portion (42).

6. The neutral position locking apparatus (20) according to any one of claims 1 to 5, wherein, when the first pin-sidewall portion (33, 133) contacts the first shaft-sidewall portion (41, 141), a space (S) is formed between a distal end face (35) of the restriction pin (30) and a bottom face (43) of the pin-receiving portion (40).

7. The neutral position locking apparatus (20) according to any one of claims 1 to 6, wherein the pin-receiving portion (40) is configured such that a length of the first shaft-sidewall portion in a pin axis (CP) direction that extends along a pin axis (CP) perpendicular to the rack axis direction (X), is greater than a length of the second shaft-sidewall portion in the pin axis (CP) direction (Z).

8. The neutral position locking apparatus (20) according to any one of claims 1 to 7, further comprising:
a buffer member (45),
wherein the buffer member (45) is attached to at least one of the second pin-sidewall portion (34) and the second shaft-sidewall portion (42).

9. A rear wheel steering system including a rack shaft (11), comprising:
the neutral position locking apparatus (20) according to any one of claims 1 to 8.

## Patentansprüche

1. Neutralpositionsverriegelungsvorrichtung (20), die eine Bewegung einer Zahnstange (11) in einer Zahnstangenachsenrichtung (X) beschränkt, welche Hinterräder (2L, 2R) lenkt, wobei die Neutralpositionsverriegelungsvorrichtung (20):
einen Beschränkungsstift (30) mit einem ersten stift-seitenwandigen Abschnitt (33, 133), der die Bewegung der Zahnstange (11) in der Zahnstangenachsenrichtung (X) an einer neutralen Position beschränkt, und einem zweiten stift-seitenwandigen Abschnitt (34), der die Bewegung der Zahnstange (11) in der Zahnstangenachsenrichtung (X) an einer Beschränkungsposition beschränkt, an der die Zahnstange (11) von der neutralen Position in der Zahnstangenachsenrichtung (X) versetzt ist,
einen in der Zahnstange (11) ausgebildeten Stift-Aufnehmeabschnitt (40) mit einem ersten stange-seitenwandigen Abschnitt (41, 141), der in Bezug auf die Stiftachse (CP) gekrümmt oder schräg ist und die Bewegung der Zahnstange (11) in der Zahnstangenachsenrichtung (X) durch Berühren des ersten stift-seitenwandigen Abschnitts (33, 133) beschränkt, wenn die Zahnstange (11) an der neutralen Position angeordnet ist, und einem zweiten stange-seitenwandigen Abschnitt (42), der die Bewegung der Zahnstange (11) durch Berühren des zweiten stift-seitenwandigen Abschnitts (34) beschränkt, wenn die Zahnstange (11) an einer Beschränkungsposition angeordnet ist, und
eine Antriebsvorrichtung (50) aufweist, die den Beschränkungsstift (30) in einer Vorsprungsrichtung (Z1), in der sich der Beschränkungsstift (30) in Richtung des Stift-Aufnahmeabschnitts (40) bewegt, und in einer Rückzugsrichtung (Z2) bewegt, in der sich der Beschränkungsstift von dem Stift-Aufnahmeabschnitt (40) weg bewegt, wobei;
der Beschränkungsstift (30) und der Stift-Aufnahmeabschnitt (40) derart gestaltet sind, dass eine Kontaktkraft in der Rückzugsrichtung (Z2), die der zweite stift-seitenwandige Abschnitt (34) von dem zweiten stange-seitenwandigen Abschnitt (42) erhält, null ist, oder derart gestaltet sind, dass eine Kontaktkraft in der Rückzugsrichtung (Z2), die der zweite stift-seitenwandige Abschnitt (34) von dem zweiten stange-seitenwandigen Abschnitt (42) erhält, kleiner als eine Kontaktkraft in der Rückzugsrichtung (Z2) ist, die der erste stift-seitenwandigen Abschnitt (33, 133) von dem ersten stange-seitenwandigen Abschnitt (41, 141) erhält.

2. Neutralpositionsverriegelungsvorrichtung (20) nach Anspruch 1, wobei:
der erste stift-seitenwandige Abschnitt (133) eine gekrümmte Form hat und so ausgebildet ist, dass er einem distalen Ende des Beschränkungsstifts (30) näher als der zweite stift-seitenwandige Abschnitt (34) ist,
der zweite stift-seitenwandige Abschnitt (34) zu einer Stiftachse (CP) parallel ist, die zur Zahnstangenachsenrichtung (X) senkrecht ist,
der erste stange-seitenwandige Abschnitt (41) in Bezug auf die Stiftachse (CP) schräg verläuft, und
der zweite stange-seitenwandige Abschnitt (42) so ausgebildet ist, dass er einer Öffnung des Stift-Aufnahmeabschnitts (40) näher als der erste stange-seitenwandige Abschnitt (41) ist, und zum zweiten stift-seitenwandigen Abschnitt (34) parallel ist.

3. Neutralpositionsverriegelungsvorrichtung (20) nach Anspruch 1, wobei:
der erste stift-seitenwandige Abschnitt (33) in Bezug auf eine Stiftachse (CP) schräg verläuft, die zur Zahnstangenachsenrichtung (X) senkrecht ist, und so ausgebildet ist, dass er einem distalen Ende (35) des Beschränkungsstifts (30) näher als der zweite stift-seitenwandige Abschnitt (34) ist,
der zweite stift-seitenwandige Abschnitt (34), der zur Stiftachse (CP) parallel ist,
der erste stift-seitenwandige Abschnitt (41) zum ersten stift-seitenwandigen Abschnitt (33) parallel ist, und
der zweite stift-seitenwandige Abschnitt (42) so ausgebildet ist, dass er einer Öffnung des Stift-Aufnahmeabschnitts (40) näher als der erste stange-seitenwandige Abschnitt (41) ist, und zum zweiten stift-seitenwandigen Abschnitt (34) parallel ist.

4. Neutralpositionsverriegelungsvorrichtung (20) nach Anspruch 1, wobei:
der erste stange-seitenwandige Abschnitt um einen ersten Neigungswinkel in Bezug auf eine Stiftachse (CP) schrägt verläuft, die zur Zahnstangenachsenrichtung (X) senkrecht ist,
der zweite stange-seitenwandige Abschnitt um einen zweiten Neigungswinkel schräg verläuft, der kleiner als der erste schräge Winkel ist, in Bezug auf die Stiftachse (CP), und so ausgebildet ist, dass er einer Öffnung des Stift-Aufnahmeabschnitts (40) näher als der erste stange-seitenwandige Abschnitt (41) ist,
der erste stift-seitenwandige Abschnitt in Bezug auf die Stiftachse (CP) gekrümmt oder schräg verläuft, und so ausgebildet ist, dass er einem distalen Ende (35) des Beschränkungsstifts (30) näher als der zweite stift-seitenwandige Abschnitt ist, und
der zweite stift-seitenwandige Abschnitt in Bezug auf die Stiftachse (CP) schräg ist, und zum zweiten stange-seitenwandigen Abschnitt (42) parallel ist.

5. Neutralpositionsverriegelungsvorrichtung (20) nach einem der Ansprüche 1 bis 4, wobei, wenn die Zahnstange (11) an einer Beschränkungsposition angeordnet ist, der zweite stift-seitenwandige Abschnitt (34) Flächenkontakt mit dem zweiten stange-seitenwandigen Abschnitt (42) erhält.

6. Neutralpositionsverriegelungsvorrichtung (20) nach einem der Ansprüche 1 bis 5, wobei, wenn der erste stift-seitenwandige Abschnitt (33, 133) den ersten stange-seitenwandigen Abschnitt (41, 141) berührt, ein Zwischenraum (S) zwischen einer distalen Endfläche (35) des Beschränkungsstifts (30) und einer Bodenfläche (43) des Stift-Aufnahmeabschnitts (40) ausgebildet ist.

7. Neutralpositionsverriegelungsvorrichtung (20) nach einem der Ansprüche 1 bis 6, wobei der Stift-Aufnahmeabschnitt (40) derart gestaltet ist, dass eine Länge des ersten stange-seitenwandigen Abschnitts in einer Stiftachsenrichtung (CP), die sich entlang der Stiftachse (CP) senkrecht zur Zahnstangenachsenrichtung (X) erstreckt, größer als eine Länge des zweiten stange-seitenwandigen Abschnitts in die Stiftachsenrichtung (Z) ist.

8. Neutralpositionsverriegelungsvorrichtung (20) nach einem der Ansprüche 1 bis 7, ferner mit:
einem Anschlagpufferelement (45),
wobei das Anschlagpufferelement (45) an dem zweiten stift-seitenwandigen Abschnitt (34) und/oder dem zweiten stange-seitenwandigen Abschnitt (42) angebracht ist.

9. Hinterradlenksystem mit einer Zahnstange (11), mit:
der Neutralpositionsverriegelungsvorrichtung (20) nach einem der Ansprüche 1 bis 8.

## Revendications

1. Dispositif de verrouillage de position neutre (20) qui limite un mouvement dans une direction d'axe de crémaillère (X), d'un arbre de crémaillère (11) qui dirige des roues arrières (2L, 2R), le dispositif de verrouillage de position neutre (20) comprenant :
un plot de limitation (30) comportant une première partie de paroi latérale de plot (33, 133) qui limite le déplacement de l'arbre de crémaillère (11) dans la direction d'axe de crémaillère (X) dans une position neutre, et une seconde partie de paroi latérale de plot (34) qui limite le déplacement de l'arbre de crémaillère (11) dans la direction d'axe de crémaillère (X) dans une position de limitation dans laquelle l'arbre de crémaillère (11) est décalé de la position neutre dans la direction d'axe de crémaillère (X) ;
une partie de réception de plot (40) formée dans l'arbre de crémaillère (11) et comportant une première partie de paroi latérale d'arbre (41, 141) qui est courbée ou inclinée par rapport à l'axe de plot (CP) et qui limite le déplacement de l'arbre de crémaillère (11) dans la direction d'axe de crémaillère (X) en entrant en contact avec la première partie de paroi latérale de plot (33, 133) quand l'arbre de crémaillère (11) est situé dans la position neutre, et une seconde partie de paroi latérale d'arbre (42) qui limite le déplacement de l'arbre de crémaillère (11) en entrant en contact avec la seconde partie de paroi latérale de plot (34) quand l'arbre de crémaillère (11) est situé dans la position de limitation ; et
un dispositif d'entraînement (50) qui déplace le plot de limitation (30) dans une direction de saillie (Z1) dans laquelle le plot de limitation (30) se déplace vers la partie de réception de plot (40) et dans une direction d'enlèvement (Z2) dans laquelle le plot de limitation s'éloigne de la partie de réception de plot (40), dans lequel :
le plot de limitation (30) et la partie de réception de plot (40) sont configurés de telle manière qu'une force de contact dans la direction d'enlèvement (Z2), que la seconde partie de paroi latérale de plot (34) reçoit de la seconde partie de paroi latérale d'arbre (42), est nulle, ou configurés de telle manière qu'une force de contact dans la direction d'enlèvement (Z2), que la seconde partie de paroi latérale de plot (34) reçoit de la seconde partie de paroi latérale d'arbre (42), est plus petite qu'une force de contact dans la direction d'enlèvement (Z2), que la première partie de paroi latérale de plot (33, 133) reçoit de la première partie de paroi latérale d'arbre (41, 141).

2. Dispositif de verrouillage de position neutre (20) selon la revendication 1, dans lequel :
la première partie de paroi latérale de plot (133) a une forme courbée et est formée de façon à être plus proche d'une extrémité distale du plot de limitation (30) que la seconde partie de paroi latérale de plot (34) ;
la seconde partie de paroi latérale de plot (34) est parallèle à un axe plot (CP) qui est perpendiculaire à la direction d'axe de crémaillère (X) ;
la première partie de paroi latérale d'arbre (41) est inclinée par rapport à l'axe de plot (CP) ; et
la seconde partie de paroi latérale d'arbre (42) est formée de façon à être plus proche d'une ouverture de la partie de réception de plot (40) que la première partie de paroi latérale d'arbre (41), et est parallèle à la seconde partie de paroi latérale de plot (34).

3. Dispositif de verrouillage de position neutre (20) selon la revendication 1, dans lequel :
la première partie de paroi latérale de plot (33) est inclinée par rapport à un axe de plot (CP) qui est perpendiculaire à la direction d'axe de crémaillère (X), et est formée de façon à être plus proche d'une extrémité distale (35) du plot de limitation (30) que la seconde partie de paroi latérale de plot (34) ;
la seconde partie de paroi latérale de plot (34) est parallèle à l'axe de plot (CP) ;
la première partie de paroi latérale d'arbre (41) est parallèle à la première partie de paroi latérale de plot (33) ; et
la seconde partie de paroi latérale d'arbre (42) est formée de façon à être plus proche d'une ouverture de la partie de réception de plot (40) que la première partie de paroi latérale d'arbre (41), et est parallèle à la seconde partie de paroi latérale de plot (34).

4. Dispositif de verrouillage de position neutre (20) selon la revendication 1, dans lequel :
la première partie de paroi latérale d'arbre est inclinée à un premier angle d'inclinaison par rapport à un axe de plot (CP) qui est perpendiculaire à la direction d'axe de crémaillère (X) ;
la seconde partie de paroi latérale d'arbre est inclinée à un second angle, qui est plus petit que le premier angle d'inclinaison, par rapport à l'axe de plot (CP), et est formée de façon à être plus proche d'une ouverture de la partie de réception de plot (40) que la première partie de paroi latérale d'arbre (41) ;
la première partie de paroi latérale de plot est courbée ou inclinée par rapport à l'axe de plot (CP), et est formée de façon à être plus proche d'une extrémité distale (35) du plot de limitation (30) que la seconde partie de paroi latérale de plot ; et
la seconde partie de paroi latérale de plot est inclinée par rapport à l'axe de plot (CP), et est parallèle à la seconde partie de paroi latérale d'arbre (42).

5. Dispositif de verrouillage de position neutre (20) selon l'une quelconque des revendications 1 à 4, dans lequel, quand l'arbre de crémaillère (11) est situé dans la position de limitation, la seconde partie de paroi latérale de plot (34) fait un contact de surface avec la seconde partie de paroi latérale d'arbre (42).

6. Dispositif de verrouillage de position neutre (20) selon l'une quelconque des revendications 1 à 5, dans lequel, quand la première partie de paroi latérale de plot (33, 133) entre en contact avec la première partie de paroi latérale d'arbre (41, 141), un espace (S) est formé entre une face d'extrémité distale (35) du plot de limitation (30) et une face inférieure (43) de la partie de réception de plot (40).

7. Dispositif de verrouillage de position neutre (20) selon l'une quelconque des revendications 1 à 6, dans lequel, la partie de réception de plot (40) est configurée de telle manière qu'une longueur de la première partie de paroi latérale d'arbre dans une direction d'axe de plot (CP) qui s'étend le long d'un axe de plot (CP) perpendiculaire à la direction d'axe de crémaillère (X), est supérieure à une longueur de la seconde partie de paroi latérale d'arbre dans la direction (Z) d'axe de plot (CP).

8. Dispositif de verrouillage de position neutre (20) selon l'une quelconque des revendications 1 à 7, comprenant en outre :
un élément amortisseur (45),
dans lequel l'élément amortisseur (45) est fixé sur au moins une de la seconde partie de paroi latérale de plot (34) et de la seconde partie de paroi latérale d'arbre (42).

9. Système de direction de roues arrière incluant un arbre de crémaillère (11), comprenant :
le dispositif de verrouillage de position neutre (20) selon l'une quelconque des revendications 1 à 8.
